# EUROPÄISCHE PATENTSCHRIFT

(11) **EP 0 496 344 B1**
(45) Veröffentlichungstag und Bekanntmachung des Hinweises auf die Patenterteilung: **01.04.1998**
(21) Anmeldenummer: 92100920.5
(22) Anmeldetag: 21.01.1992
(51) Int. Cl.: G06F 1/00

(54) **Einrichtung zur Berechtigung der Bedienung eines Gerätes mit einer Betätigungseinheit**
Device for the authorisation of the use of an apparatus with an actuating unit
Dispositif pour l'autorisation de l'utilisation d'un appareil avec une unité d'actionnement

(30) Priorität: 22.01.1991 AT 124/91
(43) Veröffentlichungstag der Anmeldung: 29.07.1992
(73) Patentinhaber: SkiData AG, 5083 Gartenau (AT)
(72) Erfinder: Wallerstorfer, Kurt, A-5204 Irrsdorf 130 (AT)
(74) Vertreter: Hofinger, Engelbert, DDr.

(56) Entgegenhaltungen:
- EP-A- 0 027 058
- EP-A- 0 295 985
- EP-A- 0 295 985

## Beschreibung

Die Erfindung betrifft eine Einrichtung zur Berechtigung der Bedienung eines Gerätes mit einer Betätigungseinheit, insbesondere von Datenverarbeitungsanlagen, mit einer zweiteiligen Berechtigungsschaltung, deren erster Schaltungsteil dem Gerät zuordenbar ist, und deren mit dem ersten Schaltungsteil zusammenwirkender zweiter Schaltungsteil in einer codierbaren, externen Vorrichtung vorgesehen ist, die zum Verbleib an einer berechtigten Person bestimmt ist, wobei die beiden Schaltungsteile jeweils eine eine berührungslose Verbindung ermöglichende, Sender und Empfänger umfassende Kommunikationseinheit aufweisen, und wobei die Verbindung die Berechtigung herstellt und deren Trennung die Berechtigung beendet.

Eine Möglichkeit, die Benützung eines Informationssystems durch Nichtberechtigte zu verhindern, beschreibt die EP-A-295 985. Dort erfolgt entsprechend der eingangs genannten Art die Kommunikation zwischen den beiden Schaltungsteilen berührungslos über Sender-Empfängeranordnungen. Sobald von einem Überwachungsposten ein die externe Vorrichtung beinhaltendes Armband an eine beliebige Person überreicht worden ist, die dadurch zu einer berechtigten Person erklärt worden ist, kann diese das Informationssystem bedienen. Der erste Schaltungsteil ist mit einer Sende-Empfangsantenne versehen, die in der Umrahmung des Bildschirms angeordnet ist. Solange sich die Person im Bereich des Bildschirms bewegt, ist die Arbeit am Informationssystem möglich.

Die Erfindung, die im Anspruch 1 definiert ist, hat es sich nun zur Aufgabe gestellt, eine Einrichtung der eingangs genannten Art zu verbessern und die Gefahr einer nichtberechtigten Bedienung eines beliebigen Gerätes zu verringern.

Erfindungsgemäß wird dies dadurch erreicht, daß die Kommunikationseinheit des ersten Schaltungsteiles eine sich im wesentlichen flächig erstreckende Antenne aufweist, die in einer Unterlage der Betätigungseinheit angeordnet ist.

Somit kann nur eine im Umfeld der Betätigungseinheit anwesende, berechtigte Person das Gerät bedienen. Sobald die Person das Umfeld verläßt, wird die Berechtigungsschaltung unterbrochen, und die Bedienung des Gerätes unmöglich.

Unter Kommunikationseinheit wird jede Einheit verstanden, die mit der jeweiligen anderen Einheit zusammenwirken kann. Prinzipiell bieten sich dafür mehrere Möglichkeiten an. So kann die Kommunikationseinheit des zweiten Schaltungsteiles in der externen Vorrichtung völlig passiv ausgebildet sein, und deren Anwesenheit von der Kommunikationseinheit des ersten Schaltungsteiles durch Änderungen in ihrer Abstrahl- oder Reflexionsaufnahmecharakteristik festgestellt werden. In diesem Fall muß die externe Vorrichtung keine Stromquelle enthalten. Eine weitere Möglichkeit besteht in der Ausstattung der Kommunikationseinheit des zweiten Schaltungsteiles mit einem Sender und der Kommunikationseinheit des ersten Schaltungsteiles mit einem Empfänger, wobei die Verbindung während des Signalempfanges hergestellt ist. Hier enthält die externe Vorrichtung eine Stromquelle, wobei die Kommunikationseinheit, d.h. deren Sender vorzugsweise nur im Bedarfsfall aktiviert wird.

Bevorzugt ist jedoch vorgesehen, daß die Kommunikationseinheiten in jedem Schaltungsteil einen Sender und einen Empfänger umfassen. In einer derartigen Ausstattung kann vorgesehen sein, daß die externe Vorrichtung keine eigene Stromquelle enthält, und die benötigte Empfangs- und Sendeenergie über die Kommunikationseinheit des ersten Schaltungsteiles zur externen Vorrichtung übertragen wird. Andererseits kann jedoch auch die externe Vorrichtung eine Stromquelle enthalten, wobei die Kommunikationseinheit des zweiten Schaltungsteiles vorzugsweise ebenfalls nur im Bedarfsfall aktiviert wird. Dies hat den Vorteil, daß nicht nur die beiden Kommunikationseinheiten sondern vorzugsweise auch die beiden Schaltungsteile identisch ausgebildet sein können.

Auf welche Weise der erste Schaltungsteil mit der Betätigungseinheit zusammenwirkt, richtet sich nach den Gegebenheiten des Gerätes bzw. auch dem erwünschten Sicherheitsgrad. Im einfachsten Fall könnte die Berechtigungsschaltung einen bloßen Ein-Ausschalter des Gerates bilden oder betätigen.

Die Übertragungsdistanz beider Kommunikationseinheiten liegt bevorzugt in der Größenordnung bis zu 100 cm, insbesondere bis zu 30 cm, sodaß die Berechtigungsschaltung nur innerhalb der die Betätigung ermöglichenden Distanz geschlossen, außerhalb dieser Distanz jedoch unterbrochen ist.

Bevorzugt wird die Anwesenheit der berechtigten Person ständig oder zumindest in kurzen Intervallen überprüft, bis aufgrund des Verlassens des Arbeitsplatzes eine Änderung erkannt wird. Die erfindungsgemäße Einrichtung ist daher auch zur Sicherstellung der berechtigten Bedienung von Eingabetastaturen von Datenverarbeitungsanlagen geeignet, die gegen einen unerlaubten Zugriff geschützt werden sollen, ohne daß Änderungen der Datenverarbeitungsanlage oder der Verarbeitungsprogramme vorgenommen werden müssen. Die vorhandene Tastatur läßt sich weiterverwenden, sie kann beispielsweise jedoch dadurch "nachgerüstet" werden, daß eine die Antenne enthaltende Folie auf die Unterseite der Tastatur oder auf den Arbeitsplatz aufgeklebt werden wird. Der Rest des ersten Schaltungsteiles wird dem Computer zugeordnet, und kann beispielsweise auf einer eine Verschlüsselungselektronik aufweisenden Einschubkarte vorgesehen sein. Dies ist besonders bei vernetzten Anlagen von Vorteil, wenn jeder Arbeitsplatz nur von einer bestimmten Person bedient werden soll oder darf.

Weiters ist auch eine Dreiteilung des ersten Schaltungsteiles möglich, in der die Antenne in der Unterlage der Betätigungseinheit ist, ein erster Teil des Restes in der Betätigungseinheit und nur der verbleibende Teil des Restes dem Gerät zugeordnet wird.

Die externe Vorrichtung ist insbesondere in der Art einer Armbanduhr ausgebildet und tragbar. Eine derartige Vorrichtung ist beispielsweise aus der WO-A-88/03296 bekannt. Diese Vorrichtung wird dort als Eintrittskarte, Fahrkarte, Wertkarte mit abbuchbarem Guthaben usw. eingesetzt, wobei sie aufgrund eines eingebauten Mikroprozessors, einer Datensendeempfangseinheit, eines Speichers, eines Displays usw. bei der Erstausgabe mit inhaberbezogenen Daten bestückbar ist, die bei jeder Verwendung berührungslos kontrollierbar sind, wobei die Kommunikation zwischen der Kontrolleinrichtung und der Vorrichtung von der Kontrolleinrichtung gestartet wird. Die Vorrichtung ist dabei insbesondere auch dazu geeignet, mehrere voneinander unabhängige Berechtigungen aufzunehmen.

Die bisherige Verwendung dieser bekannten Vorrichtung beschränkt sich auf eine bloße Schlüsselfunktion, die einen Zugang zu einer Einrichtung öffnet. Dieser wird jedoch nicht in Abhängigkeit von der Anwesenheit der Vorrichtung, sondern in Abhängigkeit von einem vorbestimmbaren Zeitraum nach seiner Öffnung wieder gesperrt. Der wesentliche Unterschied der erfindungsgemäßen Einrichtung liegt dabei darin, daß die berührungslose Verbindung zwischen den beiden Schaltungsteilen nicht nur zu Beginn hergestellt, sondern während der gesamten Anwesenheit aufrecht erhalten wird, um die Bedienung des Gerätes zu ermöglichen. In dieser Ausführung der externen Vorrichtung ist es weiters auch denkbar, die Kommunikation mit dem ersten Schaltungsteil erst nach Eingabe eines zusätzlichen individuellen Benützercodes in die externe Vorrichtung oder in die Betätigungseinheit zu ermöglichen, sodaß hier noch eine zusätzliche Sicherung bei Verlust oder Diebstahl der externen Vorrichtung gegeben ist. Wird ein individueller Benützercode in die Betätigungseinheit eingegeben, so wird zu Beginn der Kommunikation die Übereinstimmung des in die Betätigungseinheit eingegebenen Codes mit dem in der externen Vorrichtung gespeicherten Code zusätzlich überprüft. Dies ist insbesondere dann von Vorteil, wenn das Gerät von mehreren Personen bedient werden darf, die dieselbe, den zweiten Schaltungsteil enthaltende externe Vorrichtung besitzen, jedoch nicht von allen Personen alle Funktionen des Gerätes genützt werden dürfen. So können etwa in Datenverarbeitungsanlagen mehrere Personen dasselbe Terminal bedienen, jedoch jede Person nur mit dem bzw. den ihrem Benutzercode zugeordneten Programmen arbeiten.

Nachstehend wird nun die Erfindung an Hand der Figuren der Zeichnung näher erläutert. Es zeigen:
Fig. 1 eine Ausführung der erfindungsgemäßen Einrichtung, und
Fig. 2 ein Schaltschema der Berechtigungsschaltung.

Eine zweiteilige Berechtigungsschaltung für die berechtigte Bedienung eines Gerätes umfaßt einen ersten Schaltungsteil 2, der dem Gerät zuordenbar ist, und einen zweiten Schaltungsteil 6, wobei die Verbindung der beiden Schaltungsteile die Bedienung ermöglicht, und deren Trennung die Bedienung verhindert. Der zweite Schaltungsteil 6 ist in einer benutzerspezifisch codierbaren bzw. codierten externen Vorrichtung 5 vorgesehen. Beide Schaltungsteile 2,6 weisen je eine einen Sender und einen Empfänger umfassende Kommunikationseinheit 3,7 auf, die einen berührungslosen Signalaustausch ermöglichen. Dieser erfolgt vorzugsweise mittels Funk, wobei die Sende-Empfangsfrequenzen unter 250 kHz liegen, und die Übertragungsdistanz nicht mehr als 30 cm beträgt. Die Kommunikationseinheit 3 des ersten Schaltungsteiles 2 ist dabei unmittelbar der Betätigungseinheit 1 des Gerätes zugeordnet.

Die externe Vorrichtung 5 ist mit einem Armband 8 versehen und kann am Handgelenk getragen werden. Da sie bevorzugt auch eine Uhr zur Zeitanzeige enthält, ist sie somit auch als normale Armbanduhr einsetzbar. Die Annäherung der beiden Schaltungsteile 2,6 aktiviert die Betätigungseinheit 1, wenn auf die Abfrage des ersten Schaltungsteiles 2 die richtige benutzerspezifische Antwort empfangen wird, wobei die Kommunikation kontinuierlich oder in Intervallen erfolgen kann. Sobald die berechtigte Person sich aus dem Übertragungsbereich entfernt, werden die Kommunikation und damit die Benutzerberechtigungsschaltung unterbrochen, sodaß die Betätigungseinheit 1 wieder passiviert ist. Die Ausbildung der externen Vorrichtung 5 als Armbanduhr ist dabei deshalb besonders günstig, da die Betätigungseinheiten der meisten Geräte händisch bedient werden, sodaß üblicherweise zumindest eine Hand ständig innerhalb der Übertragungsdistanz liegt.

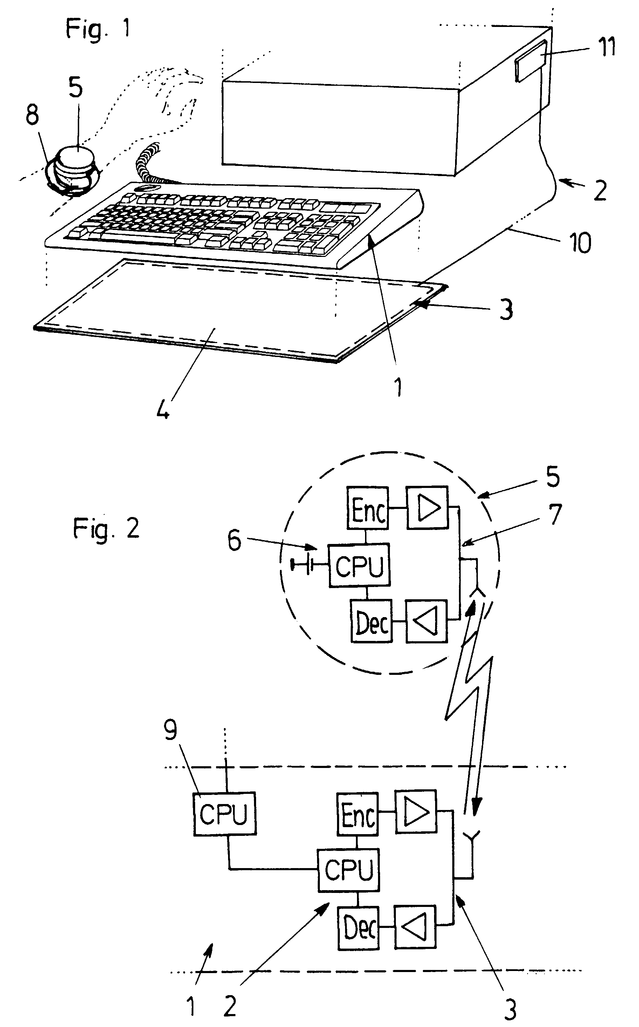

In der Ausführung nach Fig. 1 ist die Betätigungseinheit 1 als Tastatur einer Datenverarbeitungsanlage ausgebildet. Die Kommunikationseinheit 3 des ersten Schaltungsteiles 2 ist mit einer sich flächig erstreckenden Antenne, mit einer Leitung 10 und mit einem Hardware- oder Softwaremodul 11 des über die Betätigungseinheit 1 bedienbaren Computers versehen, wobei die Antenne als Unterlage für die Betätigungseinheit 1 dient, bzw. in der Unterlage angeordnet ist. Bei der Arbeit an der Tastatur liegt die am Handgelenk getragene externe Vorrichtung 5 im Umfeld der Tastatur und innerhalb der maximalen Übertragungsdistanz.

Fig. 2 zeigt schematisch die bevorzugte Ausführung der zweiteiligen Berechtigungsschaltung, in der der erste und der zweite Schaltungsteil 2,6 gleich ausgebildet sind. Der erste Schaltungsteil 2 umfaßt einen Prozessor und eine Kommunikationseinheit 3, die einen Encoder und einen Ausgangsverstärker im Sendeteil, einen Decoder und einen Eingangsverstärker im Empfangsteil sowie eine Sende-Empfangsantenne aufweist. Über den Prozessor des ersten Schaltungsteiles 2 ist während des Signalempfanges beispielsweise ein Prozessor 9 der Betätigungseinheit 1 aktiviert, sodaß an der Tastatur gearbeitet werden kann. Der zweite Schaltungsteil 6 in der externen Vorrichtung 5 umfaßt ebenfalls einen Prozessor und eine Kommunikationseinheit 7, die einen Encoder und einen Ausgangsverstärker im Sendeteil, einen Decoder und einen Eingangsverstärker im Empfangsteil sowie eine Sende-Empfangsantenne aufweist. Der Prozessor bzw. der zweite Schaltungsteil 6 wird von einer in der externen Vorrichtung 5 eingebauten Stromquelle mit Energie versorgt.

Die Berechtigungseinrichtung läßt sich bei einer Vielzahl von anderen Geräten anwenden, deren Betätigung nur berechtigten Personen vorbehalten ist. Beispiele sind die Benützung von Kopier- und anderen Geräten, die Bedienung von Registrierkassen, aber auch die Lenkung von Fahrzeugen, usw.

## Patentansprüche

1. Einrichtung zur Berechtigung der Bedienung eines Gerätes mit einer Betätigungseinheit, insbesondere von Datenverarbeitungsanlagen, mit einer zweiteiligen Berechtigungsschaltung, deren erster Schaltungsteil (2) dem Gerät zuordenbar ist, und deren mit dem ersten Schaltungsteil (2) zusammenwirkender zweiter Schaltungsteil (6) in einer codierbaren, externen Vorrichtung (5) vorgesehen ist, die zum Verbleib an einer berechtigten Person bestimmt ist, wobei die beiden Schaltungsteile (2, 6) jeweils eine eine berührungslose Verbindung ermöglichende, Sender und Empfänger umfassende Kommunikationseinheit (3, 7) aufweisen, und wobei die Verbindung die Berechtigung herstellt und deren Trennung die Berechtigung beendet, dadurch gekennzeichnet, daß die Kommunikationseinheit (3) des ersten Schaltungsteiles (2) eine sich im wesentlichen flächig erstreckende Antenne aufweist, die in einer Unterlage (4) der Betätigungseinheit (1) angeordnet ist.

2. Einrichtung nach Anspruch 1, dadurch gekennzeichnet, daß die Kommunikationseinheiten (3,7) auf Signalübertragungsdistanzen bis zu 100 cm, insbesondere bis zu 30 cm ausgelegt sind.

## Claims

1. Apparatus for authorising operation of an item of equipment having an actuating unit, in particular data processing installations, comprising a two-part authorisation circuit whose first circuit part (2) can be associated with the item of equipment and whose second circuit part (6) which co-operates with the first circuit part (2) is provided in an encodable external device (5) which is intended to remain on an authorised person, wherein the two circuit parts (2, 6) each have a respective communication unit (3, 7) which permits contact-less connection and which includes a transmitter and a receiver, and wherein the connection provides authorisation and interruption thereof terminates authorisation, characterised in that the communication unit (3) of the first circuit part (2) has an antenna which extends in a substantially flat configuration and which is arranged in a base support (4) of the actuating unit (1).

2. Apparatus according to claim 1 characterised in that the communication units (3, 7) are designed for signal transmission distances of up to 100 cm, in particular up to 30 cm.

## Revendications

1. Dispositif pour autoriser l'utilisation d'un appareil muni d'une unité d'actionnement, notamment d'installations de traitement de données, présentant un circuit d'autorisation en deux parties, dont la première partie (2) de circuit peut être affectée à l'appareil et dont la seconde partie (6) de circuit, coopérant avec la première partie (2) du circuit, est prévue dans un dispositif extérieur (5) pouvant être codé et destiné à demeurer sur une personne autorisée, les deux parties (2, 6) du circuit comportant, respectivement, une unité de communication (3, 7) englobant un émetteur et un récepteur, et autorisant une liaison sans contact, sachant que la liaison instaure l'autorisation, et que son interruption met un terme à l'autorisation, caractérisé par le fait que l'unité de communication (3) de la première partie (2) du circuit présente une antenne qui s'étend pour l'essentiel à plat et est logée dans une structure d'embase (4) de l'unité d'actionnement (1).

2. Dispositif selon la revendication 1, caractérisé par le fait que les unités de communication (3, 7) sont conçues pour des distances de transmission de signaux atteignant jusqu'à 100 cm, notamment jusqu'à 30 cm.
